# FASCICULE DE BREVET EUROPEEN

(11) **EP 1 552 650 B1**
(45) Date de publication et mention de la délivrance du brevet: **09.01.2008**
(21) Numéro de dépôt: 03808749.0
(22) Date de dépôt: 16.09.2003
(51) Int. Cl.: H04L 12/24, H04L 12/46, H04M 7/00

(54) **PROCEDE DE CONFIGURATION AUTOMATIQUE D UN EQUIPEMENT DE TELEPHONE SUR IP ET/OU DE DONNEES, SYSTEME ET EQUIPEMENT LE METTANT EN OEUVRE**
VERFAHREN ZUR AUTOMATISCHEN KONFIGURATION EINER IP-FERNSPRECHEINRICHTUNG UND/ODER DATEN, SYSTEM UND EINRICHTUNG ZU IHRER IMPLEMENTIERUNG
METHOD FOR THE AUTOMATIC CONFIGURATION OF AN IP TELEPHONY DEVICE AND/OR DATA, SYSTEM AND DEVICE IMPLEMENTING SAME

(30) Priorité: 14.10.2002 FR 0212760
(43) Date de publication de la demande: 13.07.2005
(73) Titulaire: Eads Telecom, 78180 Montigny Le Bretonneux (FR)
(72) Inventeur: MONTEIRO, Arthur, F-78650 Beynes (FR); JOUSSET, Richard, F-78690 Saint Remy L'Honore (FR)
(74) Mandataire: Verdure, Stéphane
(86) Numéro de dépôt international: PCT/FR2003/002728
(87) Numéro de publication internationale: WO 2004/036830

(56) Documents cités:
- EP-A- 1 017 200
- WO-A-00/77983
- US-B1- 6 223 218

## Description

La présente invention se rapporte à la technologie TolP (de l'anglais "Telephony over IP" qui signifie téléphonie sur IP), qui repose sur l'utilisation des réseaux IP ("Intemet Protocol") existants et la cohabitation des flux d'informations de téléphonie (ci-après flux ToIP), avec les autres flux d'informations (ci-après flux de données).

Afin de garantir des communications de bonne qualité, le réseau, et éventuellement les postes téléphoniques (aussi appelés téléphones IP), doivent gérer la qualité de service (QoS) c'est-à-dire le contrôle du délai de remise des paquets IP, de la gigue (i.e. la variation du délai de remisé des paquets), et de la perte de paquets. Cette gestion peut être réalisée soit par la mise en oeuvre d'un protocole spécifique tel que le protocole DiffServ ("Differentiated Services", RFC 2474 et RFC 2475) qui agit au niveau 3 (couche réseau du modèle de référence OSI) par marquage ("tagging", en anglais) des paquets avec un niveau de priorité, soit par la mise en oeuvre d'un protocole tel que la norme "VLAN Tagging" IEEE 802.1 Q/P de l'IEEE qui agit au niveau 2 (couche liaison du modèle de référence OSI) par marquage des trames avec un identificateur de sous-réseau virtuel et un niveau de priorité.

Même si les équipements existants du réseau sont compatibles avec le protocole DiffServ, le marquage des trames selon la norme 802.1 Q/P est avantageux si le réseau, par exemple un réseau Ethemet (voir la norme IEEE 802.3, reprise à l'ISO sous la nomenclature ISO 8802.3), présente déjà une structure de sous-réseaux virtuels, par exemple de type VLAN ("Virtual Local Area Network"), pour les différentes applications informatiques. Par exemple, le réseau peut comprendre un VLAN "données" pour transporter les flux de données, et un VLAN "téléphonie" pour transporter les flux TolP. Dans ce cas en effet, chaque équipement terminal du réseau marque déjà ses trames d'un identificateur de VLAN en implémentant la version 802.1 Q de la norme. Il suffit alors d'implémenter la version 802.1 Q/P de la norme pour qu'un téléphone IP marque ses trames avec un identificateur de VLAN et un niveau de priorité, ce qui permet de garantir une bonne QoS.

Selon la version actuelle d'IP (IPv4), un équipement de réseau a besoin des paramètres suivants pour fonctionner, qui forment ce qu'on appelle un bail et font l'objet d'une procédure de configuration :
- une adresse unique sur le réseau (adresse IP) ;
- un masque de sous-réseau (ou "subnet mask"), qui identifie le sous-réseau IP auquel l'équipement appartient parmi l'ensemble des réseaux IP interconnectés ; et,
- l'adresse du routeur par défaut avec lequel l'équipement doit communiquer ("DeFault Gateway", ou DFG).

D'autres paramètres sont disponibles pour les besoins spécifiques des applications. Au total, il existe 63 paramètres. C'est pourquoi la configuration des équipements effectuée manuellement lors de l'installation de chacun d'eux est fastidieuse, surtout pour les téléphones IP qui n'ont qu'un clavier de téléphone pour interface homme/machine.

Il existe un besoin consistant à permettre à un téléphone IP de recevoir automatiquement ses paramètres IP d'un serveur de configuration tel qu'un serveur DHCP ("Dynamic Host Configuration Protocol", RFC 3361) à chaque mise en service ("boot" en anglais). Par mise en service, on entend le raccordement physique et/ou électrique de l'équipement au réseau. Ceci permet en effet de simplifier la gestion du réseau, en particulier le déploiement en masse de postes téléphoniques sur le réseau IP existant mais aussi leur maintenance. La configuration automatique des paramètres IP évite en effet d'avoir à saisir au clavier de chaque poste téléphonique les informations IP et les informations de QoS (i.e., les informations spécifiques à DiffServ ou à 802.1 Q/P, par exemple) qui forment les paramètres de son bail. A cet effet, le client DHCP du poste téléphonique demande directement ces paramètres au serveur DHCP à l'aide du champ "class identifier" d'une requête de bail ("lease" en anglais). Le serveur DHCP lui envoie alors les paramètres à l'aide du champ "Vendor Specific information" d'une offre de bail.

Un environnement de travail d'un utilisateur comprend en général un téléphone IP et un système informatique tel qu'un ordinateur à usage général (ci-après PC, pour "Personal Computer"). Il faut donc gérer la cohabitation de différents protocoles et normes qui sont mis en oeuvre lors de la mise en service du téléphone IP ou du PC, à savoir DHCP, Relay DHCP, IEEE 802.1 Q/P et/ou DiffServ, et IEEE 802.3. On rappelle que DHCP permet à tout système IP de recevoir dynamiquement sa configuration réseau d'un serveur DHCP. Relay DHCP, qui correspond à un chapitre de DHCP, est une fonctionnalité qui, lorsqu'elle est implémentée sur les routeurs IP, permet de relayer les demandes émises par les clients DHCP vers un serveur DHCP connecté sur un réseau différent (réseau distant sur lien WAN ou VLAN différent). La norme IEEE 802.1 Q/P permet de définir des sous réseaux virtuels et de leur affecter des priorités de traitement différentes. DiffServ est un protocole de marquage de la priorité d'une trame IP. Enfin, la norme IEEE 802.3 définit le format des trames Ethernet.

Lorsque le téléphone IP et le PC d'un même poste de travail sont raccordés au réseau IP par deux ports d'accès physiques séparés, le traitement des protocoles et normes est réalisé de façon complètement distincte par les équipements actifs du réseau. Une politique de sous-réseaux virtuels de QoS et de configuration automatique peut donc être mise en oeuvre séparément pour le téléphone IP et pour le PC.

Par contre, lors de l'utilisation d'un commutateur pour raccorder les deux équipements au réseau IP à travers un seul port d'accès physique, la différenciation nécessaire entre les deux équipements n'est plus réalisable avec les fonctions de base des protocoles et des standards mis en oeuvre. Un tel commutateur est par exemple un commutateur Ethernet ayant trois ports. Il est par exemple intégré au téléphone IP pour permettre de déployer la téléphonie sur IP sans nécessiter de modifier l'architecture d'un réseau existant pour rajouter un port d'accès physique dédié à la téléphonie pour chaque poste de travail. Certains problèmes liés au séquencement des opérations lors de la mise en service du téléphone IP peuvent alors apparaître. Ces problèmes sont liés au fonctionnement spécifique du protocole DHCP et de la norme IEEE 802.1. Il en résulte que le téléphone IP et le PC reçoivent un bail qui est forcement sur le même VLAN. Cela signifie que le flux TolP et le flux de données sont mélangés, et sont traités avec la même priorité.

Il est donc souhaitable de garantir une transparence de fonctionnement du téléphone IP qui intègre un commutateur, vis à vis du PC qui lui est raccordé et qui est lui aussi un client DHCP, lors de la mise en service du téléphone IP ou du PC, lorsque ces équipements effectuent leur demande de bail et qu'ils reçoivent des informations de configuration.

Une technologie a été proposée par le constructeur d'équipements de réseau Cisco, qui repose sur la mise en oeuvre d'un protocole supplémentaire appelé CDP ("Cisco Discovery Protocol"). Ce protocole est entièrement propriétaire. On le trouve uniquement sur certains commutateurs Ethernet, certains routeurs et sur les téléphones IP fabriqués par Cisco.

Lors de sa mise en service, le téléphone IP utilise le protocole CDP pour s'identifier sur le commutateur Ethemet Cisco. Ce dernier reconnaît ce type de client et place automatiquement les trames Ethernet suivantes sur le VLAN "téléphonie" dont le numéro a été préalablement configuré sur chacun des commutateurs Ethemet du réseau.

Si un PC est raccordé au même port d'accès physique du réseau Ethemet par l'intermédiaire dudit commutateur Ethernet, le commutateur fait automatiquement la différence entre les deux équipements en se basant sur les adresses MAC ("Media Access Control") de chacun d'eux. Les trames Ethernet provenant du PC sont dirigées sur le VLAN "données", qui est typiquement paramétré sur le port du commutateur qui les reçoit, et les trames émises par le téléphone IP sont diffusées sur le VLAN "téléphonie". Ainsi, l'ensemble des flux TolP de chaque téléphone IP du réseau se retrouve dynamiquement sur un VLAN séparé auquel on applique la priorité désirée.

Cette procédure de configuration est certes entièrement automatique, les paramètres de numéro de VLAN et de priorité pouvant être configurés de façon centralisée par l'outil d'administration du réseau. Néanmoins, la solution est entièrement basée sur un protocole propriétaire disponible uniquement sur certains commutateurs Ethernet et routeurs Cisco (seulement les plus récents). En particulier la procédure décrite ci-dessus ne fonctionne plus si le réseau comprend des équipements autres que ceux de Cisco. Le document WO 00/77983 A1 (21/12/2000) divulgue une méthode selon le préambule de la revendication 1.

De plus, l'ensemble des téléphones IP reçoit un bail qui est obligatoirement sur un seul et même VLAN "téléphonie". Or, dans certaines organisations ou entreprises, plusieurs VLANs "téléphonie" différents sont nécessaires pour répondre à des besoins de sécurisation ou d'isolation des différents sous-réseaux téléphoniques.

L'invention vise à remédier aux inconvénients de l'art antérieur précité.

A cet effet, un premier aspect de l'invention propose un procédé de configuration automatique d'un équipement déterminé d'un réseau de transmission de données à commutation de paquets sur lequel sont définis au moins un premier sous-réseau virtuel pour des équipements de réseau d'un premier type et au moins un second sous-réseau virtuel pour des équipements de réseau d'un second type. L'équipement est physiquement raccordé à l'un quelconque desdits premier et second sous-réseaux virtuels. Il appartient à l'un quelconque desdits premier et second types. Le procédé comprend les étapes suivant lesquelles l'équipement effectue les étapes consistant à :
- émettre en mode diffusion ("broadcast" en anglais) sur le sous-réseau virtuel auquel il est physiquement raccordé, une première requête de bail comprenant un identificateur du type auquel il appartient ;
- recevoir, en réponse à ladite première requête de bail, un premier bail contenant une adresse sur le sous-réseau virtuel auquel il est physiquement raccordé, un identificateur du sous-réseau virtuel des équipements du type auquel il appartient, et, si il n'appartient pas au type des équipements du sous-réseau virtuel auquel il est raccordé, une information d'activation de marquage des trames avec ledit identificateur de sous-réseau virtuel ;
- si ledit premier bail contient ladite information d'activation de marquage :
   - libérer ledit premier bail ;
   - émettre en mode diffusion sur le sous-réseau virtuel des équipements du type auquel il appartient, une seconde requête de bail marquée avec ledit identificateur du sous-réseau virtuel des équipements du type auquel il appartient ; et,
   - recevoir, en réponse à ladite seconde requête de bail, un second bail contenant une adresse sur le sous-réseau virtuel des équipements du type auquel il appartient ;
- sinon conserver ledit premier bail.

Un deuxième aspect de l'invention concerne un système comprenant un réseau de transmission de données à commutation de paquets sur lequel sont définis au moins un premier sous-réseau virtuel pour des équipements de réseau d'un premier type et au moins un second sous-réseau virtuel pour des équipements de réseau d'un second type. Le système comprend en outre un équipement déterminé qui est physiquement raccordé à l'un quelconque desdits premier et second sous-réseaux virtuels. L'équipement appartient à l'un quelconque desdits premier et second types. L'équipement est adapté pour mettre en oeuvre un procédé selon le premier aspect.

Un troisième aspect de l'invention se rapporte à un équipement d'un réseau de transmission de données à commutation de paquets sur lequel sont définis au moins un premier sous-réseau virtuel pour des équipements de réseau d'un premier type et au moins un second sous-réseau virtuel pour des équipements de réseau d'un second type. L'équipement appartient à l'un quelconque desdits premier et second types. Il comprend des moyens pour exécuter un procédé selon le premier aspect.

Les notions de type d'équipements et de sous-réseaux virtuel des équipements d'un type déterminé sont non limitatives. On désigne par là un ensemble d'équipements que l'administrateur du réseau peut souhaiter regrouper sur un même sous-réseau virtuel selon un critère déterminé ou une combinaison de critères déterminés. Par exemple, un critère peut se rapporter à la nature des équipements (notamment, les équipements terminaux ou les équipements de système, respectivement pour la téléphonie ou pour les données, peuvent être regroupés sur des sous-réseaux virtuels distincts). Un autre critère peut être géographique (tous les équipements situés dans un bâtiment déterminé ou une zone locale déterminée peuvent être regroupés sur un même sous-réseau virtuel). Un autre critère encore peut être fonctionnel (les équipements terminaux d'un groupe d'utilisateurs identifiés peuvent être regroupés sur un même sous-réseau virtuel, indépendamment de leur position géographique). Etc.

Le réseau principal est par exemple un réseau local (LAN ou "Local Area Network") avec, comme épine dorsale un réseau Ethernet. Les sous-réseaux virtuels sont par exemple des VLAN. Les sous-réseaux virtuels sont par exemple définis et gérés suivant la norme IEEE 802.1 Q/P. Suivant cette norme, la première proposition de bail contient en outre un numéro de priorité associé à l'équipement. Dans ce cas, le seconde requête de bail contient avantageusement ce numéro de priorité.

Les équipements du premier et/ou du second type sont par exemple des équipements terminaux. Les équipements du premier type sont par exemple des PCs, et les équipements du second type sont par exemple des téléphones IP. Néanmoins l'invention peut aussi être mise en oeuvre sur des équipements de réseau tels que des passerelles ToIP ou autres.

Le serveur de configuration est par exemple un serveur DHCP, c'est-à-dire qu'il implémente le protocole de configuration DHCP. La mise en oeuvre de l'invention est compatible avec des architectures de réseaux desservies par un seul ou plusieurs serveurs de configuration.

La première requête de bail est traitée par un premier serveur de configuration qui est ou non physiquement raccordé au sous-réseau virtuel auquel l'équipement est physiquement raccordé. Dans la négative la première requête de bail en mode diffusion est relayée en mode uni-destinataire ("unicast" en anglais) vers ledit premier serveur de configuration via un ou plusieurs routeurs appropriés, tel que des routeurs implémentant le protocole Relay DHCP dans l'exemple.

De même, la seconde requête de bail est traitée par ledit premier serveur de configuration ou un second serveur de configuration qui est ou non physiquement raccordé au sous-réseau virtuel des équipements auquel l'équipement appartient. Dans la négative la seconde requête de bail en mode diffusion est relayée en mode uni-destinataire vers ledit premier ou second serveur de configuration via un ou plusieurs routeurs appropriés.

Si c'est le même serveur de configuration (i.e., ledit premier serveur de configuration) qui dessert le premier et le second sous-réseaux virtuels et traite la première et la seconde requêtes de bail, ce serveur de configuration gère une première et une seconde plages d'adresses ("scope" en anglais) respectivement sur le premier et sur le second sous-réseaux virtuels. D'une manière générale, il gère une plage d'adresses pour chaque sous-réseau virtuel qu'il dessert. Ainsi, s'il est en outre le seul serveur de configuration du réseau, il gère une plage d'adresses pour chaque sous-réseau virtuel du réseau.

L'invention est ainsi avantageusement basée sur l'utilisation de protocoles et normes standards : IEEE 802.3, IEEE 802.1 Q/P, DHCP et Relay DHCP. Elle est donc complètement indépendante des équipements existants sur le réseau.

Chaque équipement se configure entièrement, et de manière entièrement dynamique, d'après les renseignements fournis par le (ou les) serveur(s) de configuration. Aucune intervention supplémentaire de l'administrateur du réseau n'est requise pour configurer la QoS. Le déploiement et surtout la maintenance des grands réseaux téléphoniques sur IP sont donc plus aisés.

L'administrateur du réseau peut établir autant de sous-réseaux virtuels de chaque type que nécessaire, en paramétrant uniquement le (ou les) serveur(s) de configuration. De plus, la modification des sous-réseaux virtuels est aisée, en modifiant le paramétrage du (ou des) serveur(s) de configuration sans devoir intervenir sur les équipements terminaux reliés au réseau principal.

Le premier équipement et le second équipement peuvent fonctionner simultanément en tant que client du protocole de configuration. Bien qu'étant raccordés au réseau principal par le même port d'accès physique, ils reçoivent des baux de configuration sur des sous-réseaux virtuels différents et, sont ainsi rattachés à des sous-réseaux virtuels différents. On garantit ainsi la QoS propre à chaque type d'équipements.

L'utilisation du câblage existant avec un seul port d'accès physique, i.e., une seule prise réseau, par utilisateur (grâce à un commutateur intégré à l'un des équipements) est ainsi rendue possible en séparant les flux d'informations propres à chaque type d'équipements sur des sous-réseaux virtuels distincts, dont chacun est configurable de façon dynamique.

La mise en oeuvre de l'invention facilite grandement l'installation en masse et la maintenance de téléphones IP sur des infrastructures de réseaux tels que des grandes épines dorsales ("backbones" en anglais) Ethernet, du type de ceux déployés sur les campus universitaires ou les sites d'entreprises.

De plus, d'autres équipements que des équipements terminaux, tels que par exemple les passerelles ToIP ou autres du réseau, peuvent en bénéficier. Les avantages de l'invention sont, pour eux, moindres que pour des équipements terminaux car ces équipements n'intègrent pas de commutateur Ethernet permettant de les chaîner avec des équipements informatiques.

D'autres caractéristiques et avantages de l'invention apparaîtront encore à la lecture de la description qui va suivre. Celle-ci est purement illustrative et doit être lue en regard des dessins annexés sur lesquels :
- la figure 1 est un schéma d'un exemple de système de transmission de données à commutation de paquets ;
- la figure 2 est un schéma illustrant des exemples de topologie de réseau avec sous-réseaux virtuels d'un système selon la figure 1 ;
- la figure 3 est un chronogramme d'échange de messages d'un exemple de mise en oeuvre du procédé selon l'invention dans un premier cas ; et,
- la figure 4 est un chronogramme d'échanges de messages d'un exemple de mise en oeuvre du procédé selon l'invention dans un second cas.

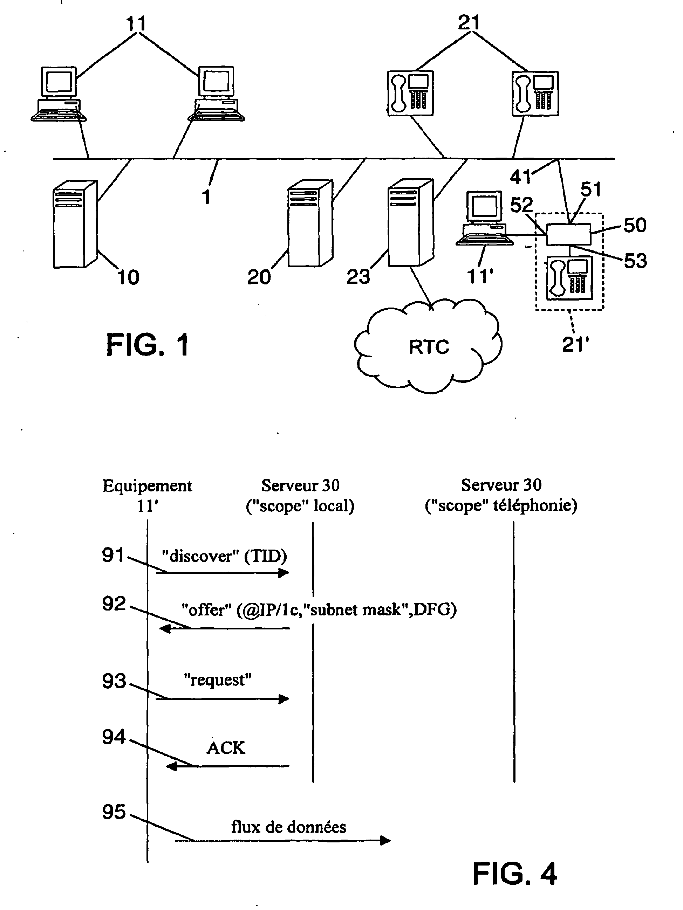

A la figure 1, on a représenté schématiquement un exemple de système informatique basé sur un réseau de transmission de données à commutation de paquets, notamment un réseau IP de type LAN.

Le réseau comprend par exemple, comme épine dorsale 1, un réseau Ethernet comprenant un ou plusieurs commutateurs Ethernet. Des équipements de réseau sont connectés à l'épine dorsale 1. Ces équipements comprennent des équipements terminaux et des équipements de système.

Les équipements terminaux comprennent des PC désignés sous la référence générale 11 et des postes téléphoniques (téléphones IP) désignés sous la référence générale 21. Les postes téléphoniques 21 peuvent être des postes dédiés ou des postes téléphoniques émulés sur un ordinateur (appelés "soft-phone" dans le jargon de l'Homme du métier).

En principe, chaque équipement terminal est physiquement raccordé au réseau IP par l'intermédiaire d'un port d'accès physique respectif. Ce port d'accès physique peut alors être affecté à un sous-réseau virtuel des équipements du type de l'équipement terminal considéré. Toutefois, lorsqu'un service de téléphonie sur IP est déployé sur un réseau IP existant, il arrive que le câblage du réseau soit tel qu'un seul port d'accès physique au réseau est disponible pour chaque poste de travail d'utilisateur. Il est alors possible d'incorporer un commutateur Ethernet dans les postes téléphoniques 21 de manière à permettre le raccordement, par exemple, d'un PC et d'un poste téléphonique sur ledit port d'accès physique au réseau. Cela évite de modifier le câblage du réseau.

Ainsi, dans l'exemple représenté, un port d'accès physique 41 est partagé par un PC 11' et un poste téléphonique 21'. Dans l'exemple, le poste téléphonique 21' comprend un commutateur 50 à 3 ports de communication, à savoir un port de sortie 51, et deux ports d'entrée 52 et 53. Le port 51 est relié au port d'accès physique 41 du réseau. Le port 52 est relié au PC 11' pour recevoir le flux "données" provenant de ce PC et le port 53 reçoit le flux ToIP du poste téléphonique 21'.

Bien entendu, le commutateur peut aussi être compris dans le PC 11', ou être externe au PC 11' et au poste téléphonique 21'.

Les équipements de système comprennent un serveur de réseau 10 qui gère les applications "données" du réseau, un serveur d'appel 20 qui gère les applications "téléphonie" du réseau, ainsi éventuellement qu'une passerelle TolP 23 assurant l'interface du réseau Ethernet avec le réseau téléphonique commuté 24 (RTC). Le serveur d'appel 20 établit dynamiquement la correspondance entre les numéros d'appel des postes téléphoniques et leurs adresses IP respectives.

Pour permettre une gestion efficace de la QoS pour la téléphonie, en particulier, il est possible de définir plusieurs réseaux virtuels de type VLAN suivant la norme IEEE 802.1 Q/P.

De plus, une configuration automatique de chaque équipement terminal lors de sa mise en service est possible en implémentant sur le réseau un protocole de configuration dynamique tel que DHCP.

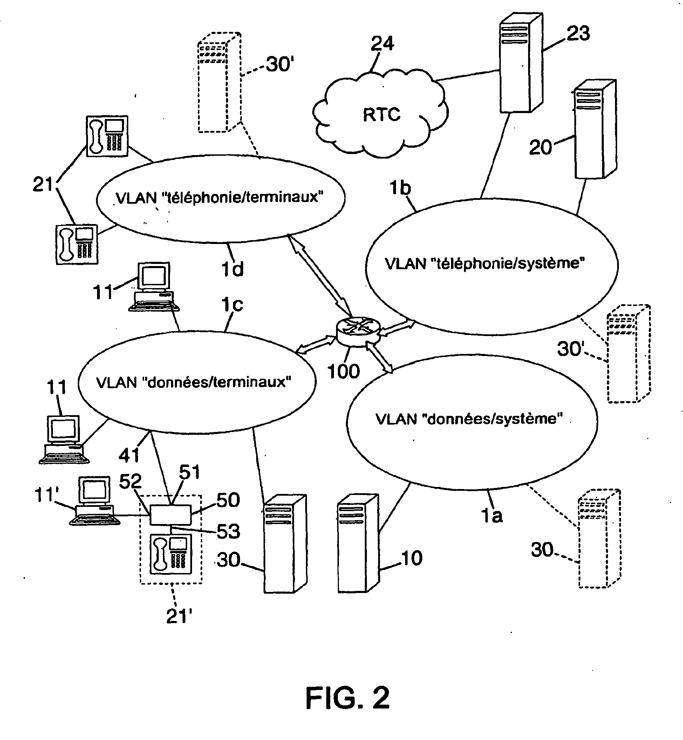

Ces différentes caractéristiques sont illustrées par le schéma de la figure 2 sur laquelle les mêmes éléments qu'à la figure 1 portent les mêmes références.

Dans l'exemple de la figure 2, le réseau 1 de la figure 1 est partagé en quatre sous-réseaux virtuels 1a à 1d. Ces sous-réseaux virtuels sont de type VLAN, et la transmission de données entre eux est gérée par un routeur 100. On distingue ainsi :
- un VLAN "données/système" 1a pour les équipements de système qui gèrent les applications "données", auquel est raccordé le serveur de réseau 10;
- un VLAN "téléphonie/système" 1 b pour les équipements de système qui gèrent les applications "téléphonie", auquel sont raccordés le serveur d'appel 20 et le routeur 23 ;
- un VLAN "données/terminaux" 1c, pour les équipements terminaux de type "données", auquel sont raccordés les PCs ; et,
- un VLAN "téléphonie/terminaux" 1d, pour les équipements terminaux de type "data", auquel sont raccordés les postes téléphoniques 21.

Cet exemple retient donc, pour la définition des sous-réseaux virtuels, un critère se rapportant à la nature des équipements de réseau. On notera toutefois que, par exemple en raison d'une contrainte liée au câblage, le port de communication 41 auquel le poste téléphonique 21' est physiquement raccordé (via le commutateur 50), appartient au sous-réseau virtuel 1c. On rappelle que le PC 11' est également physiquement raccordé, via le commutateur 50, au port de communication 41 qui est affecté au sous-réseau virtuel 1c.

En outre, au moins un serveur de configuration 30, tel qu'un serveur DHCP, est relié au réseau. Le serveur de configuration 30 a pour fonction de distribuer dynamiquement les configurations des équipements, notamment les équipements terminaux, lors de leur mise en service.

Dans un premier exemple, correspondant au cas de la figure 2, le serveur 30 est le seul serveur de configuration du réseau et est physiquement raccordé au sous-réseau virtuel 1c. Dans un deuxième exemple, le serveur 30 est le seul serveur de configuration du réseau, et, est physiquement raccordé à un autre sous-réseau virtuel, par exemple le sous-réseau virtuel 1a. Dans un troisième exemple, le réseau comprend un second serveur de configuration 30' qui est physiquement raccordé au VLAN 1d, en plus du serveur 30. Enfin, dans un quatrième exemple, le second serveur de configuration 30' est physiquement raccordé au VLAN 1b. Le raccordement des serveurs 30 et 30' selon ces deuxième, troisième et quatrième exemples est illustré à la figure 2 en traits discontinus.

Dans le cas d'une topologie de réseau telle que celle représentée à la figure 2, si aucune précaution n'est prise, la mise en oeuvre du protocole DHCP lors de la mise en service du posté téléphonique 21' aura pour résultat que celui-ci recevra du serveur 30 un bail (en particulier une adresse IP) sur le sous-réseau virtuel 1c. Au mieux, le flux ToIP de ce poste téléphonique 21' sera mélangé avec le flux de données des PC 11 et 11', ce qui est très mauvais en terme de qualité de service QoS. Au pire, le poste téléphonique 21' n'a pas accès au serveur d'appel 20. Il ne peut donc s'enregistrer sur le serveur, ce qui signifie qu'il restera inactif. C'est pourquoi, il convient que le poste téléphonique 21' reçoive un bail sur le sous-réseau 1d des terminaux téléphoniques.

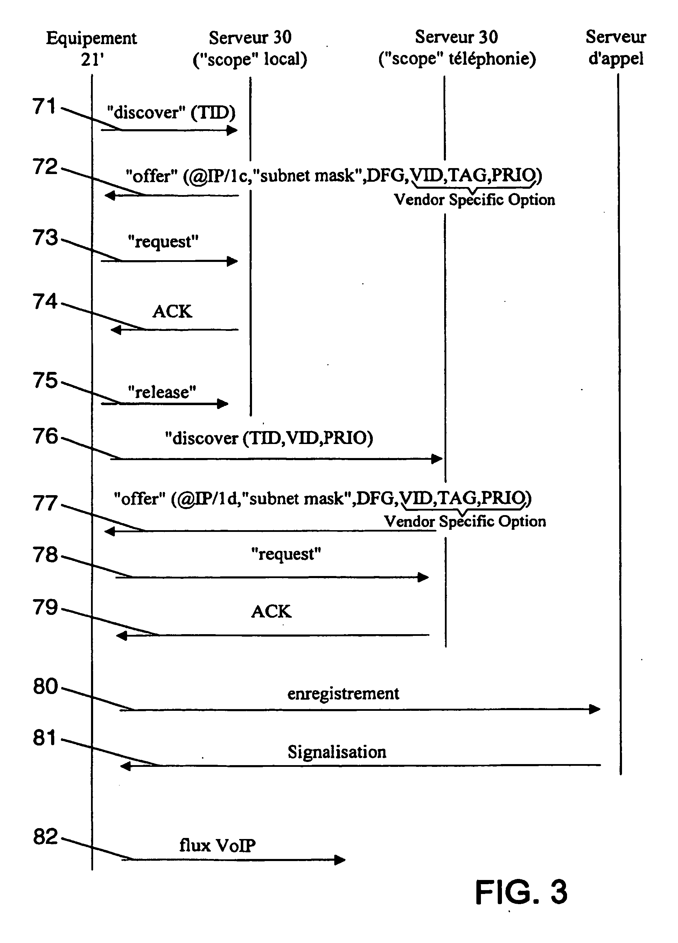

Les chronogrammes d'échanges de messages de la figure 3 et de la figure 4 illustrent un exemple de mise en oeuvre du procédé, lors de la mise en service du poste téléphonique 21' et du PC 11' respectivement.

Dans le cas des figures 3 et 4, on considère le premier exemple précité suivant lequel le serveur de configuration 30 est physiquement raccordé au sous-réseau 1c, et suivant lequel il est en outre le seul serveur de configuration du réseau. Dans ce cas, il gère une première plage d'adresses sur le sous-réseau 1 c et une seconde plage d'adresses sur chacun des autres sous-réseaux, notamment sur le VLAN 1d. De plus, le routeur 100 implémente le protocole Relay DHCP pour relayer vers le serveur 30 les requêtes DHCP émises en mode diffusion sur les autres sous-réseaux, notamment sur le VLAN 1d.

Voyons tout d'abord le cas illustré à la figure 3, qui correspond à la mise en route de l'équipement 21'. On rappelle que cet équipement n'appartient pas au type des équipements du VLAN auquel il est physiquement raccordé. En effet, c'est un poste téléphonique physiquement raccordé au port de communication 41 qui est affecté au VLAN "données/terminaux" 1c.

Dans une étape 71 l'équipement 21' émet une première requête de bail. A ce stade, l'équipement 21' ne connaît ni son adresse IP ni l'adresse IP du serveur DHCP qui dessert le VLAN 1c. Cette requête est donc émise en mode diffusion selon la norme IEEE 802.3, à l'intérieur du VLAN 1c auquel l'équipement 21' est physiquement raccordé en tant que client DHCP. Dans l'exemple, il s'agit d'un message DHCP appelé "discover". Il est complété, dans un champ "Class identifier", d'un identificateur TID ("Terminal IDentifier") du type d'équipements auquel l'équipement 21' appartient, c'est-à-dire un identificateur propre aux postes téléphoniques du réseau. Cette requête est reçue et traitée par le serveur de configuration 30 qui est raccordé au VLAN 1c.

Dans une étape 72, le serveur de configuration 30 envoie une première offre de bail au poste téléphonique, en réponse à la première requête de bail. Il s'agit d'un message DHCP appelé "offer". Ce message est émis selon la norme IEEE 802.3. Le bail proposé contient les paramètres classiques à savoir : une adresse IP (notée @IP/1c à la ligne) sur le sous-réseau virtuel 1c, un masque de sous-réseau ("subnet"), et l'adresse du routeur par défaut (DFG). L'adresse IP est une adresse de la plage d'adresses du VLAN 1c qui est gérée par le serveur 30.

En outre, lorsque la norme IEEE 801.1 Q/P est mise en oeuvre, un champ "Vendor Specific Option" du bail contient aussi un identificateur VID ("Vlan IDentifier") du VLAN 1d, c'est-à-dire du VLAN des équipements du type auquel il appartient. Cet identificateur VID est un champ de 12 bits qui indique l'adresse IP du VLAN.

De plus, comme l'équipement 21' n'appartient pas au type des équipements du VLAN 1c auquel il est physiquement raccordé, le bail contient en outre, également dans le champ "Vendor Specific Option" précité, une information d'activation de marquage des trames. Cette information comprend un bit TAG déterminé qui est par exemple mis à la valeur 1 dans ce cas. Cette information signifie que l'équipement 21' doit marquer ses trames avec l'identificateur du VLAN 1d.

Le premier bail contient en outre, toujours dans le champ "Vendor Specific Option", un numéro de priorité PRIO associé à l'équipement. Ce numéro est codé dans un champ de 3 bits. Il s'ensuit que huit niveaux de priorité peuvent être définis, ce qui permet de privilégier certaines applications par rapport à d'autres.

Suivant le protocole DHCP, l'équipement 21' envoie alors, dans une étape 73, un message DHCP appelé "request" pour accepter le bail. Ensuite, le serveur 30 lui envoie, dans une étape 74, un message DHCP appelé "ACK" pour confirmer l'attribution du bail. Ces deux messages sont émis suivant la norme IEEE 803.2.

Pour simplifier, les étapes 72 à 74 peuvent être résumées en disant que l'équipement 21' reçoit le premier bail tel que décrit ci-dessus.

Lorsque l'information d'activation de marquage des trames est présente (i.e., lorsque le bit TAG est à 1), l'équipement 21' libère le premier bail en envoyant, dans une étape 75 un message DHCP appelé "Release". Ce message est envoyé selon la norme IEEE 802.3.

Dans une étape 76, l'équipement envoie ensuite une seconde requête de bail. A ce stade, l'équipement 21' connaît l'adresse IP du VLAN 1d des équipements du type auquel il appartient, mais il ne connaît pas l'adresse du serveur DHCP qui dessert ce VLAN. C'est pourquoi la seconde requête de bail est émise en mode diffusion à l'intérieur du VLAN 1d. Elle est émise selon la norme IEEE 802.1 Q, c'est-à-dire qu'elle est marquée avec l'identificateur VID du VLAN 1d. Si la première offre de bail contenait un numéro de priorité, la seconde requête de bail est émise selon la norme IEEE 802.1 Q/P c'est-à-dire qu'elle est en outre marquée avec le numéro de priorité PRIO. Dans l'exemple, la seconde requête de bail est aussi un message "discover". Ce message est aussi complété, dans le champ "Class identifier", de l'identificateur du type d'équipements auquel l'équipement 21' appartient. Cette requête est reçue et traitée par le serveur de configuration 30 qui est raccordé au VLAN 1c.

Dans une étape 77, le serveur 30 envoie à l'équipement 21', en réponse à la seconde requête de bail, une seconde proposition de bail contenant une adresse IP sur le VLAN 1d, c'est-à-dire le sous-réseau virtuel des équipements du type auquel l'équipement appartient. Cette adresse est notée "@IP/1c" à la figure. Il s'agit d'un message "ofter" émis selon la norme IEEE 802.3. Il contient en outre les mêmes informations que la première offre de bail émise à l'étape 72.

Dans une étape 78, l'équipement 21' accepte la seconde proposition de bail en envoyant un message "request" en utilisant le masquage de la norme IEEE 802.1 Q/P. Ensuite, le serveur 30 lui envoie, dans une étape 79, un message "ACK" pour confirmer l'attribution du second bail. Ce dernier message est émis suivant la norme IEEE 802.3.

Pour simplifier, les étapes 77 à 79 peuvent être résumées en disant que l'équipement 21' reçoit le second bail tel que décrit ci-dessus.

Dans une étape 80, l'équipement 21' envoie ensuite un message en mode uni-destinataire au serveur d'appel 20 afin de s'enregistrer sur ce serveur. Ce message est émis suivant la norme IEEE 802.1 Q/P c'est-à-dire qu'il est marqué avec l'identificateur du VLAN 1d, et, le cas échéant, avec le numéro de priorité affecté à l'équipement 21'.

En retour, le serveur d'appel 20 envoie à l'équipement 21', dans une étape 81, de la signalisation en mode uni-destinataire, suivant la norme IEEE 802.1 Q/P c'est-à-dire marquée avec le numéro du VLAN 1d.

Dans une étape 82, l'équipement 21' commence à envoyer des informations de téléphonie (flux ToIP) vers d'autres postes téléphoniques 21, ou vers le RTC via la passerelle ToIP 23. Les paquets de ce flux TolP sont conformes à la norme IEEE 802.1 Q/P c'est-à-dire qu'il sont marqués avec l'identificateur du VLAN 1d, avec le numéro de priorité affecté à l'équipement 21'.

Tournons nous maintenant vers le cas illustré à la figure 4, de la mise en route de l'équipement 11'. Au contraire de l'équipement 21', cet équipement appartient au type des équipements du VLAN auquel il est physiquement raccordé.

Des étapes 91 à 94 sont identiques aux étapes respectivement 71 à 74 qui ont été décrites plus haut concernant l'équipement 21'. Dans ce cas, toutefois, le message de la réponse 92 ne contient pas les informations du champ "Vendor Specific Option".

C'est pourquoi l'équipement 11' conserve le premier bail reçu à l'étape 92 avec la première proposition de bail. Dans une étape 95, l'équipement 11' commence à envoyer des informations "données" (flux de données) vers d'autres PCs 11, ou vers le serveur de réseau 10. Les paquets de ce flux de données sont conformes à la norme IEEE 802.3 c'est-à-dire qu'ils ne sont pas marqués.

Le commutateur 50 doit donc être capable de recevoir des paquets marqués (ceux du flux ToIP provenant de l'équipement 21') et des paquets non marqués (ceux du flux de données provenant de l'équipement 11'). Tous les commutateurs Ethernet du marché ne satisfaisant pas cette condition, il convient de choisir un commutateur compatible. La même contrainte s'applique au commutateur Ethernet du réseau 1 auquel le commutateur 50 est raccordé.

Considérons maintenant le cas du deuxième exemple envisagé plus haut, suivant lequel le serveur 30 est le seul serveur de configuration du réseau, et est physiquement raccordé à un autre sous-réseau virtuel que le VLAN 1 c, notamment au sous-réseau virtuel 1a dans l'exemple. Dans ce cas, la première requête de bail envoyée à l'étape 71 ou à l'étape 91 et la seconde requête de bail envoyée à l'étape 76 sont relayées vers le serveur 30' par le routeur 100. A cet effet, le routeur 100 implémente le protocole Relay DHCP.

Considérons maintenant le cas du troisième exemple envisagé plus haut, suivant lequel le réseau comprend un second serveur de configuration 30' qui est physiquement raccordé au VLAN 1d, en plus du serveur 30 qui est physiquement raccordé au VLAN 1c. Dans ce cas, l'échange de messages des étapes 76 à 79 a lieu entre l'équipement 21' et le serveur 30' au lieu du serveur 30, car le serveur 30 ne dispose pas de plage d'adresses pour la téléphonie, cette plage d'adresses étant gérée par le serveur 30'.

Considérons maintenant le cas du quatrième exemple envisagé plus haut, suivant lequel le réseau comprend un second serveur de configuration 30' qui est physiquement raccordé au VLAN 1 a, en plus du serveur 30 qui est physiquement raccordé au VLAN 1c. Dans ce cas, d'une part, la seconde requête de bail envoyée à l'étape 76 est relayée vers le serveur 30', par le routeur 100 qui implémente le protocole Relay DHCP à cet effet. Et d'autre part, l'échange de messages des étapes 76 à 79 a lieu entre l'équipement 21' et le serveur 30' au lieu du serveur 30. Le serveur 30 n'a pas besoin, dans cet exemple non plus, de gérer une plage d'adresses pour la téléphonie, puisque cette plage d'adresses est gérée par le serveur 30'.

## Revendications

1. Procédé de configuration automatique d'un équipement déterminé (11',21') d'un réseau de transmission de données à commutation de paquets (1) sur lequel sont définis au moins un premier sous-réseau virtuel (1c) pour des équipements de réseau d'un premier type (11) et au moins un second sous-réseau virtuel (1d) pour des équipements de réseau d'un second type (21), ledit équipement déterminé étant physiquement raccordé à l'un quelconque desdits premier et second sous-réseaux virtuels et appartenant à l'un quelconque desdits premier et second types, le procédé étant characterisé en ce que l'équipement effectue les étapes consistant à :
- émettre (71,91) en mode diffusion sur le sous-réseau virtuel auquel il est physiquement raccordé, une première requête de bail comprenant un identificateur, TID, du type auquel il appartient ;
- recevoir (72-74 ; 92-94), en réponse à ladite première requête de bail, un premier bail contenant une adresse, @ IP/1c, sur le sous-réseau virtuel auquel il est physiquement raccordé, un identificateur, VID, du sous-réseau virtuel des équipements du type auquel il appartient, et, si il n'appartient pas au type des équipements du sous-réseau virtuel auquel il est raccordé, une information, TAG, d'activation de marquage des trames avec ledit identificateur ;
- si ledit premier bail contient ladite information d'activation de marquage :
- libérer (75) ledit premier bail;
- émettre (76) en mode diffusion sur le sous-réseau virtuel des équipements du type auquel il appartient, une seconde requête de bail marquée avec ledit identificateur du sous-réseau virtuel des équipements du type auquel il appartient ; et,
- recevoir (77-79), en réponse à ladite seconde requête de bail, un second bail contenant une adresse, @ IP/1d, sur le sous-réseau virtuel des équipements du type auquel il appartient ;
- sinon conserver ledit premier bail.

2. Procédé selon la revendication 1, suivant lequel le premier bail contient en outre un numéro de priorité, PRIO, associé à l'équipement, et suivant lequel ladite seconde requête de bail contient ledit numéro de priorité.

3. Procédé selon la revendication 1 ou la revendication 2, suivant lequel la première requête de bail en mode diffusion est relayée en mode uni-destinataire, via au moins un routeur approprié (100), vers un premier serveur de configuration (30 - traits discontinus) qui n'est pas physiquement raccordé au sous-réseau virtuel auquel l'équipement est physiquement raccordé.

4. Procédé selon l'une quelconque des revendications 1 à 3, suivant lequel la seconde requête de bail en mode diffusion est relayée en mode uni-destinataire, via au moins un routeur approprié (100), vers le premier serveur de configuration ou vers un second serveur de configuration (30') qui n'est pas physiquement raccordé, respectivement qui ne sont pas raccordés au sous-réseau virtuel des équipements du type auquel l'équipement appartient.

5. Procédé selon l'une quelconque des revendications 1 à 4, suivant lequel, la première requête de bail et la seconde requête de bail sont traitées par un seul et même serveur de configuration qui gère une première plage d'adresses sur le premier sous-réseau virtuel et une seconde plage d'adresses sur le second sous-réseau virtuel.

6. Procédé selon l'une quelconque des revendications précédentes, suivant lequel le réseau de transmission de données est un réseau Ethernet défini par la norme IEEE 802.3.

7. Procédé selon l'une quelconque des revendications précédentes, suivant lequel les sous-réseaux virtuels sont définis par la norme IEEE 802.4 Q/P.

8. Procédé selon l'une quelconque des revendications précédentes, suivant lequel les équipements du premier type et/ou les équipements du second type sont des équipements terminaux.

9. Procédé selon la revendication 8, suivant lequel les équipements du premier type comprennent des ordinateurs à usage général, et/ou suivant lequel les équipements du second type comprennent des postes téléphoniques.

10. Procédé selon l'une quelconque des revendications précédentes, suivant lequel l'équipement (21') comprend un commutateur (50) ayant un port de communication de sortie (51) pour la liaison physique au réseau et au moins deux ports de communication d'entrée, dont l'un (53) est adapté pour recevoir/émettre un flux de paquets de/vers l'équipement, et dont l'autre (52) est adapté pour recevoir/émettre un flux de paquets de/vers un équipement du second type (11') si l'équipement est du premier type ou de/vers un équipement du premier type si l'équipement est du second type.

11. Procédé selon l'une quelconque des revendications 3 à 10, suivant lequel le ou les serveurs de configuration mettent en oeuvre le protocole de configuration DHCP.

12. Système comprenant un réseau de transmission de données à commutation de paquets (1) sur lequel sont définis au moins un premier sous-réseau virtuel (1c) pour des équipements de réseau d'un premier type (11) et au moins un second sous-réseau virtuel (1d) pour des équipements de réseau d'un second type (21), comprenant en outre un équipement (11',21') déterminé qui est physiquement raccordé à l'un quelconque desdits premier et second sous-réseaux virtuels et qui appartient à l'un quelconque desdits premier et second types, suivant lequel ledit équipement est adapté pour mettre en oeuvre un procédé selon la revendication 1.

13. Système selon la revendication 2, suivant lequel le premier bail contient en outre un numéro de priorité, PRIO, associé à l'équipement, et suivant lequel la seconde requête de bail contient ledit numéro de priorité.

14. Système selon la revendication 12 ou la revendication 13, comprenant en outre au moins un routeur (100) pour relayer, en mode uni-destinataire, la première requête de bail vers un premier serveur de configuration (30 - traits discontinus) du système, qui n'est pas physiquement raccordé au sous-réseau virtuel auquel l'équipement est physiquement raccordé.

15. Système selon l'une quelconque des revendications 12 à 14, comprenant en outre un routeur (100) adapté pour relayer, en mode uni-destinataire, la seconde requête de bail vers le premier serveur de configuration ou vers un second serveur de configuration du système (30'), qui n'est pas physiquement raccordé, respectivement qui ne sont pas raccordés au sous-réseau virtuel des équipements du type auquel l'équipement appartient.

16. Système selon l'une quelconque des revendications 12 à 15, comprenant, pour traiter la première requête de bail et la seconde requête de bail, un seul et même serveur de configuration qui gère une première plage d'adresses sur le premier sous-réseau virtuel et une seconde plage d'adresses sur le second sous-réseau virtuel.

17. Système selon l'une quelconque des revendications 12 à 16, suivant lequel le réseau de transmission de données est un réseau Ethernet défini par la norme IEEE 802.3.

18. Système selon l'une quelconque des revendications 12 à 17, suivant lequel les sous-réseaux virtuels sont définis par la norme IEEE 802.1 Q/P.

19. Système selon l'une quelconque des revendications 12 à 18, suivant lequel les équipements du premier type et/ou les équipements du second type sont des équipements terminaux.

20. Système selon la revendication 19, suivant lequel les équipements du premier type comprennent des ordinateurs à usage général, et/ou suivant lequel les équipements du second type comprennent des postes téléphoniques.

21. Système selon l'une quelconque des revendications 12 à 20, suivant lequel l'équipement (21') comprend un commutateur (50) ayant un port de communication de sortie (51) pour la liaison physique au réseau et au moins deux ports de communication d'entrée, dont l'un (53) est adapté pour émettre/recevoir un flux de paquets de/vers l'équipement, et dont l'autre (52) est adapté pour émettre/recevoir un flux de paquets de/vers un équipement du second type (11') si l'équipement est du premier type ou de/vers un équipement du premier type si l'équipement est du second type.

22. Système selon l'une quelconque des revendications 12 à 21, suivant lequel le ou les serveurs de configuration mettent en oeuvre le protocole de configuration DHCP.

23. Equipement d'un réseau de transmission de données à commutation de paquets (1) sur lequel sont définis au moins un premier sous-réseau virtuel (1 c) pour des équipements de réseau d'un premier type (11) et au moins un second sous-réseau virtuel (1d) pour des équipements de réseau d'un second type (21), l'équipement appartenant à l'un quelconque desdits premier et second types et comprenant des moyens pour exécuter un procédé selon la revendication 1 ou la revendication 2.

24. Equipement selon la revendication 23, comprenant un commutateur (50) ayant un port de communication de sortie (51) pour la liaison physique au réseau et au moins deux ports de communication d'entrée (52,53), dont l'un est adapté pour recevoir/émettre un flux de paquets de/vers l'équipement, et dont l'autre est adapté pour recevoir/émettre un flux de paquets de/vers un équipement du second type si l'équipement est du premier type ou d'un équipement du premier type si l'équipement est du second type.

## Claims

1. A method for the automatic configuration of a determined device (11', 21') of a packet switching data transmission network (1) on which are defined at least one first virtual subnet (1c) for network devices of a first type (11) and at least one second virtual subnet (1d) for network devices of a second type (21), said determined device being physically connected to any one of said first and second virtual subnets and belonging to any one of said first and second types, the method being **characterised in that** the device performs the steps of:
- sending (71, 91), in broadcast mode over the virtual subnet to which it is physically connected, a first lease request comprising an identifier of the type to which it belongs;
- receiving (72-74; 92-94), in response to said first lease request, a first lease containing an address on the virtual subnet to which it is physically connected, an identifier (VID) of the virtual subnet of the devices of the type to which it belongs, and, if it does not belong to the type of the devices of the virtual subnet to which it is connected, a cue for activating tagging of the frames with said identifier;
- if said first lease contains said tagging activation cue:
- releasing (75) said first lease;
- sending (76), in broadcast mode over the virtual subnet of the devices of the type to which it belongs, a second lease request tagged with said identifier of the virtual subnet of the devices of the type to which it belongs; and
- receiving (77-79), in response to said second lease request, a second lease containing an address on the virtual subnet of the devices of the type to which it belongs;
- otherwise retaining said first lease.

2. The method as claimed in claim 1, wherein the first lease further contains a priority number associated with the device, and wherein said second lease request contains said priority number.

3. The method as claimed in claim 1 or claim 2, wherein the first lease request in broadcast mode is relayed in uni-recipient mode, via at least one appropriate router (100), to a first configuration server (30 - broken lines) which is not physically connected to the virtual subnet to which the device is physically connected.

4. The method as claimed in any one of claims 1 to 3, wherein the second lease request in broadcast mode is relayed in uni-recipient mode, via at least one appropriate router (100), to the first configuration server or to a second configuration server (30') which is not physically connected, respectively which are not connected to the virtual subnet of the devices of the type to which the device belongs.

5. The method as claimed in any one of claims 1 to 4, wherein the first lease request and the second lease request are processed by one and the same configuration server which manages a first address range on the first virtual subnet and a second address range on the second virtual subnet.

6. The method as claimed in any one of the preceding claims, wherein the data transmission network is an Ethernet network defined by the IEEE 802.3 standard.

7. The method as claimed in any one of the preceding claims, wherein the virtual subnets are defined by the IEEE 802.1 Q/P standard.

8. The method as claimed in any one of the preceding claims, wherein the devices of the first type and/or the devices of the second type are terminal devices.

9. The method as claimed in claim 8, wherein the devices of the first type comprise general-purpose computers, and/or wherein the devices of the second type comprise telephone sets.

10. The method as claimed in any one of the preceding claims, wherein the device (21') comprises a switch (50) having an output communication port (51) for the physical link to the network and at least two input communication ports, one (53) of which is adapted for receiving/sending a packet stream from/to the device, and the other (52) of which is adapted for receiving/sending a packet stream from/to a device of the second type (11') if the device is of the first type or from/to a device of the first type if the device is of the second type.

11. The method as claimed in any one of claims 3 to 10, wherein the configuration server or servers employ the DHCP configuration protocol.

12. A system comprising a packet switching data transmission network (1) on which are defined at least one first virtual subnet (1c) for network devices of a first type (11) and at least one second virtual subnet (1d) for network devices of a second type (21), further comprising a determined device (11', 21') which is physically connected to any one of said first and second virtual subnets and which belongs to any one of said first and second types, wherein said device is adapted for implementing a method as claimed in claim 1.

13. The system as claimed in claim 12, wherein the first lease further contains a priority number associated with the device, and wherein said second lease request contains said priority number.

14. The system as claimed in claim 12 or claim 13, further comprising at least one router (100) for relaying, in uni-recipient mode, the first lease request to a first configuration server (30 - broken lines) of the system, which is not physically connected to the virtual subnet to which the device is physically connected.

15. The system as claimed in any one of claims 12 to 14, further comprising a router (100) adapted for relaying, in uni-recipient mode, the second lease request to the first configuration server or to a second configuration server of the system (30') which is not physically connected, respectively which are not connected to the virtual subnet of the devices of the type to which the device belongs.

16. The system as claimed in any one of claims 12 to 15, comprising, for processing the first lease request and the second lease request, one and the same configuration server which manages a first address range on the first virtual subnet and a second address range on the second virtual subnet.

17. The system as claimed in any one of claims 12 to 16, wherein the data transmission network is an Ethernet network defined by the IEEE 802.3 standard.

18. The system as claimed in any one of claims 12 to 17, wherein the virtual subnets are defined by the IEEE 802.1 Q/P standard.

19. The system as claimed in any one of claims 12 though 18, wherein the devices of the first type and/or the devices of the second type are terminal devices.

20. The system as claimed in claim 19, wherein the devices of the first type comprise general-purpose computers, and/or wherein the devices of the second type comprise telephone sets.

21. The system as claimed in one of the claims 12 to 20, wherein the device (21') comprises a switch (50) having an output communication port (51) for the physical link to the network and at least two input communication ports, one (53) of which is adapted for sending/receiving a packet stream from/to the device, and the other (52) of which is adapted for sending/receiving a packet stream from/to a device of the second type (11') if the device is of the first type or from/to a device of the first type if the device is of the second type.

22. The system as claimed in any one of claims 12 to 21, wherein the configuration server or servers employ the DHCP configuration protocol.

23. A device of a packet switching data transmission network (1) on which are defined at least one first virtual subnet (1c) for network devices of a first type (11) and at least one second virtual subnet (1d) for network devices of a second type (21), the device belonging to any one of said first and second types and comprising means for executing a method as claimed in claim 1 or claim 2.

24. The device as claimed in claim 23, comprising a switch (50) having an output communication port (51) for the physical link to the network and at least two input communication ports (52, 53), one of which is adapted for receiving/sending a packet stream from/to the device, and the other of which is adapted for receiving/sending a packet stream from/to a device of the second type if the device is of the first type or from a device of the first type if the device is of the second type.

## Patentansprüche

1. Verfahren zur automatischen Konfiguration einer bestimmten Anlage (11', 21') eines paketvermittelten Datenübertragungsnetzes (1), in dem wenigstens ein erstes virtuelles Unternetz (1c) für Netzanlagen eines ersten Typs (11) und wenigstens ein zweites virtuelles Unternetz (1d) für Netzanlagen eines zweiten Typs (21) definiert sind, wobei die bestimmte Anlage mit irgendeinem des ersten und des zweiten virtuellen Unternetzes physikalisch verbunden ist und zu irgendeinem des ersten und des zweiten Typs gehört, wobei das Verfahren **dadurch gekennzeichnet ist, dass** die Anlage die Schritte ausführt, bestehend aus:
- in der Rundsendebetriebsart in das virtuelle Unternetz, mit dem sie physikalisch verbunden ist, eine erste Vermietungsanforderung auszusenden (71, 91), die einen Identifizierer des Typs, zu dem sie gehört, enthält;
- als Reaktion auf die erste Vermietungsanforderung eine erste Vermietung, die eine Adresse in dem virtuellen Unternetz, mit dem sie physikalisch verbunden ist, und einen Identifizierer des virtuellen Unternetzes der Anlagen des Typs, zu dem sie gehört, und dann, wenn sie nicht zu dem Typ der Anlagen des virtuellen Unternetzes, mit dem sie verbunden ist, gehört, eine Information für die Aktivierung des Markierens der Rahmen mit dem Identifizierer zu empfangen (72-74; 92-94);
- falls die erste Vermietung die Markierungsaktivierungsinformation enthält:
- die erste Vermietung freizugeben (75);
- in der Rundsendebetriebsart in dem virtuellen Unternetz der Anlagen des Typs, zu dem sie gehört, eine zweite Vermietungsanforderung auszusenden (76), die mit dem Identifizierer des virtuellen Unternetzes der Anlagen des Typs, zu dem sie gehört, markiert ist; und
- als Reaktion auf die zweite Vermietungsanforderung eine zweite Vermietung, die eine Adresse enthält, in dem virtuellen Unternetz der Anlagen des Typs, zu dem sie gehört, zu empfangen (77-79);
- andernfalls Beibehalten der ersten Vermietung.

2. Verfahren nach Anspruch 1, wobei die erste Vermietung außerdem eine Prioritätsnummer enthält, die der Anlage zugeordnet ist, und wobei die zweite Vermietungsanforderung die genannte Prioritätsnummer enthält.

3. Verfahren nach Anspruch 1 oder Anspruch 2, wobei die erste Vermietungsanforderung in der Rundsendebetriebsart in der Einzelzielbetriebsart über wenigstens einen geeigneten Router (100) an einen ersten Konfigurationsserver (30 - unterbrochene Linien), der mit dem virtuellen Unternetz, mit dem die Anlage physikalisch verbunden ist, nicht physikalisch verbunden ist, übertragen wird.

4. Verfahren nach einem der Ansprüche 1 bis 3, wobei die zweite Vermietungsanforderung in der Rundesendebetriebsart in der Einzelzielbetriebsart über wenigstens einen geeigneten Router (100) an den ersten Konfigurationsserver oder an einen zweiten Konfigurationsserver (30'), der bzw. die nicht mit dem virtuellen Unternetz der Anlagen des Typs, zu dem die Anlage gehört, physikalisch verbunden sind, übertragen wird.

5. Verfahren nach einem der Ansprüche 1 bis 4, wobei die erste Vermietungsanforderung und die zweite Vermietungsanforderung durch ein und denselben Konfigurationsserver verarbeitet werden, der einen ersten Adressenbereich in dem ersten virtuellen Unternetz und einen zweiten Adressenbereich in dem zweiten virtuellen Unternetz verwaltet.

6. Verfahren nach einem der vorhergehenden Ansprüche, wobei das Datenübertragungsnetz ein Ethernet-Netz ist, das durch die Norm IEEE 802.3 definiert ist.

7. Verfahren nach einem der vorhergehenden Ansprüche, wobei die virtuellen Unternetze durch die Norm IEEE 802.1 Q/P definiert sind.

8. Verfahren nach einem der vorhergehenden Ansprüche, wobei die Anlagen des ersten Typs und/oder die Anlagen des zweiten Typs Endgerät-Anlagen sind.

9. Verfahren nach Anspruch 8, wobei die Anlagen des ersten Typs Universalrechner enthalten und/oder wobei die Anlagen des zweiten Typs Telefonapparate enthalten.

10. Verfahren nach einem der vorhergehenden Ansprüche, wobei die Anlage (21') einen Umschalter (50) enthält, der versehen ist mit einem Ausgangskommunikations-Port (51) für die physikalische Verbindung mit dem Netz und mit wenigstens zwei Eingangskommunikations-Ports, wovon einer (53) ausgelegt ist, um einen Paketstrom von der Anlage zu empfangen bzw. an sie zu senden, und wovon der andere (52) ausgelegt ist, um einen Paketstrom von einer Anlage des zweiten Typs (11') zu empfangen bzw. an sie zu senden, falls die Anlage vom ersten Typ ist, oder von einer Anlage des ersten Typs zu empfangen bzw. an sie zu senden, falls die Anlage vom zweiten Typ ist.

11. Verfahren nach einem der Ansprüche 3 bis 10, wobei der oder die Konfigurationsserver das DHCP-Konfigurationsprotokoll ausführen.

12. System, das ein paketvermitteltes Datenübertragungsnetz (1) enthält, in dem wenigstens ein erstes virtuelles Unternetz (1c) für Netzanlagen eines ersten Typs (11) und wenigstens ein zweites virtuelles Unternetz (1d) für Netzanlagen eines zweiten Typs (21) definiert sind, wobei das System außerdem eine bestimmte Anlage (11', 21') enthält, die mit irgendeinem des ersten und des zweiten virtuellen Unternetzes physikalisch verbunden ist und zu irgendeinem des ersten und des zweiten Typs gehört, wobei die Anlage ausgelegt ist, um ein Verfahren nach Anspruch 1 auszuführen.

13. System nach Anspruch 12, wobei die erste Vermietung außerdem eine Prioritätsnummer die der Anlage zugeordnet ist, enthält und wobei die zweite Vermietungsanforderung die genannte Prioritätsnummer enthält.

14. System nach Anspruch 12 oder Anspruch 13, das außerdem wenigstens einen Router (100) enthält, um in einer Einzelzielbetriebsart die erste Vermietungsanforderung an einen ersten Konfigurationsserver (30 - unterbrochene Linien) des Systems, der physikalisch nicht mit dem virtuellen Unternetz verbunden ist, mit dem die Anlage physikalisch verbunden ist, zu übertragen.

15. System nach einem der Ansprüche 12 bis 14, das außerdem einen Router (100) enthält, der ausgelegt ist, um in einer Einzelzielbetriebsart die zweite Vermietungsanforderung an den ersten Konfigurationsserver oder an einen zweiten Konfigurationsserver (30') des Systems, der bzw. die nicht mit dem virtuellen Unternetz von Anlagen des Typs, zu dem die Anlage gehört, physikalisch verbunden ist bzw. sind, zu übertragen.

16. System nach einem der Ansprüche 12 bis 15, in dem die erste Vermietungsanforderung und die zweite Vermietungsanforderung von ein und demselben Konfigurationsserver verarbeitet werden, der einen ersten Adressenbereich in dem ersten virtuellen Unternetz und einen zweiten Adressenbereich in dem zweiten virtuellen Unternetz verwaltet.

17. System nach einem der Ansprüche 12 bis 16, wobei das Datenübertragungsnetz ein Ethernet-Netz ist, das durch die Norm IEEE 802.3 definiert ist.

18. System nach einem der Ansprüche 12 bis 17, wobei die virtuellen Unternetze durch die Norm IEEE 802.1 Q/P definiert sind.

19. System nach einem der Ansprüche 12 bis 18, wobei die Anlagen des ersten Typs und/oder die Anlagen des zweiten Typs Endgerät-Anlagen sind.

20. System nach Anspruch 19, wobei die Anlagen des ersten Typs Universalrechner enthalten und/oder wobei die Anlagen des zweiten Typs Telefonapparate enthalten.

21. System nach einem der Ansprüche 12 bis 20, wobei die Anlage (21') einen Umschalter (50) enthält, der versehen ist mit einem Ausgangskommunikations-Port (51) für die physikalische Verbindung mit dem Netz und mit wenigstens zwei Eingangskommunikations-Ports, wovon einer (53) ausgelegt ist, um einen Paketstrom von der Anlage zu empfangen bzw. an sie zu senden und wovon der andere (52) ausgelegt ist, um einen Paketstrom von einer Anlage des zweiten Typs (11') zu empfangen bzw. an sie zu senden, falls die Anlage vom ersten Typ ist, oder von einer Anlage des ersten Typs zu empfangen bzw. an sie zu senden, falls die Anlage vom zweiten Typ ist.

22. System nach einem der Ansprüche 12 bis 21, wobei der oder die Konfigurationsserver das DHCP-Konfigurationsprotokoll ausführen.

23. Anlage eines paketvermittelten Datenübertragungsnetzes (1), in dem wenigstens ein erstes virtuelles Unternetz (1c) für Netzanlagen eines ersten Typs (11) und wenigstens ein zweites virtuelles Unternetz (1d) für Netzanlagen eines zweiten Typs (21) definiert sind, wobei die Anlage zu irgendeinem des ersten und des zweiten Typs gehört und Mittel enthält, um ein Verfahren nach Anspruch 1 oder nach Anspruch 2 auszuführen.

24. Anlage nach Anspruch 23, die einen Umschalter (50) enthält, der versehen ist mit einem Ausgangskommunikations-Port (51) für die physikalische Verbindung mit dem Netz und mit wenigstens zwei Eingangskommunikations-Ports (52, 53), wovon einer ausgelegt ist, um einen Paketstrom von der Anlage zu empfangen bzw. an sie zu senden und wovon der andere ausgelegt ist, um einen Paketstrom von einer Anlage des zweiten Typs zu empfangen bzw. an sie zu senden, falls die Anlage vom ersten Typ ist, oder von einer Anlage des ersten Typs zu empfangen bzw. an sie zu senden, falls die Anlage vom zweiten Typ ist.
